(19) Europäisches Patentamt / European Patent Office / Office européen des brevets

(11) **EP 4 198 453 B1**

(12) **EUROPEAN PATENT SPECIFICATION**

(45) Date of publication and mention
of the grant of the patent:
**29.05.2024  Bulletin 2024/22**

(21) Application number: **21215372.0**

(22) Date of filing: **17.12.2021**

(51) International Patent Classification (IPC):
*G01C 21/34* (2006.01)    *B60L 53/62* (2019.01)
*G06Q 50/06* (2024.01)    *G06Q 10/063* (2023.01)
*B60L 58/12* (2019.01)    *B60L 53/67* (2019.01)
*B60L 53/63* (2019.01)    *G06Q 10/047* (2023.01)
*G08G 1/00* (2006.01)     *G06Q 10/04* (2023.01)
*G06Q 10/02* (2012.01)    *G06Q 50/40* (2024.01)

(52) Cooperative Patent Classification (CPC):
**G01C 21/3469; B60L 53/62; B60L 53/63;
B60L 53/67; B60L 58/12; G01C 21/343;
G06Q 10/02; G06Q 10/025; G06Q 10/047;
G06Q 10/063; G06Q 50/06; G06Q 50/40;
G08G 1/202;** B60L 2240/622; G01C 21/3438;

(Cont.)

(54) **ELECTRIC VEHICLE DIAL-A-RIDE SYSTEM**

ELEKTROFAHRZEUG-ANRUFFAHRDIENSTSYSTEM

SYSTÈME DE TRANSPORT SUR DEMANDE POUR VÉHICULES ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023  Bulletin 2023/25**

(73) Proprietor: **Honda Research Institute Europe
GmbH
63073 Offenbach/Main (DE)**

(72) Inventor: **Limmer, Steffen
63073 Offenbach/Main (DE)**

(74) Representative: **Beder, Jens
Mitscherlich PartmbB
Patent- und Rechtsanwälte
Karlstraße 7
80333 München (DE)**

(56) References cited:
- **TAI-YU MA: "Two-stage battery recharge
  scheduling and vehicle-charger assignment
  policy for dynamic electric dial-a-ride services",
  ARXIV.ORG, CORNELL UNIVERSITY LIBRARY,
  201 OLIN LIBRARY CORNELL UNIVERSITY
  ITHACA, NY 14853, 4 October 2020 (2020-10-04),
  XP081925469,**
- **BONGIOVANNI CLAUDIA ET AL: "The electric
  autonomous dial-a-ride problem",
  TRANSPORTATION RESEARCH PART B.
  METHODOLOGICAL, vol. 122, 16 March 2019
  (2019-03-16), pages 436-456, XP085647083, ISSN:
  0191-2615, DOI: 10.1016/J.TRB.2019.03.004**
- **SAYARSHAD HAMID R ET AL: "Non-myopic
  dynamic routing of electric taxis with battery
  swapping stations", SUSTAINABLE CITIES AND
  SOCIETY, ELSEVIER, AMSTERDAM, NL, vol. 57,
  28 February 2020 (2020-02-28), XP086146370,
  ISSN: 2210-6707, DOI:
  10.1016/J.SCS.2020.102113 [retrieved on
  2020-02-28]**

- **JAIN SIDDHARTHA ET AL: "Large Neighborhood Search for Dial-a-Ride Problems", 12 September 2011 (2011-09-12), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 400 - 413, XP047436477, ISBN: 978-3-540-74549-5 * abstract ***

(52) Cooperative Patent Classification (CPC): (Cont.)
Y02T 10/70; Y02T 10/7072

**Description**

The invention is in the field of a dial-a-ride service. In particular, the invention relates to a computer-implemented method, a computer program product, an apparatus and a dial-a-ride system with which a driving schedule for electric vehicles is generated.

A dial-a-ride system is a transport system comprising vehicles (e.g. cars, minivans and/or trucks) used to transport persons or other objects and a control apparatus assigning trips to the vehicles, wherein users request transportation services by submitting a request specifying a pick-up and drop-off location and the apparatus determines optimal tours/routes of a number of vehicles through the different pick-up and drop-off locations in order to serve the transportation requests.

WO 2011/154613 A1 discloses a dynamic dial-a-ride system, in which the routes are changed/adapted in real-time (or at least near real-time) to new requests.

The problem of finding optimal tours is the dial-a-ride problem, wherein different variants of the dial-a-ride problem consider different constraints and objectives. Most typical constraints are that the routes have to start/stop at certain start/end locations (depots), that the pick-up and drop-off locations have to be served within specific time windows, and that a vehicle can transport only a limited number of passengers (objects) at the same time.

The objective function usually relates to minimizing the operating costs and/or maximizing the user satisfaction.

Today, the number of electric vehicles is increasing due to economical and especially environmental reasons. At the same time, progress in autonomous driving is made. Hence, it can be assumed that dial-a-ride service fleets of the future consist of electric vehicles, which are operated over long time periods without breaks. In order to be able to provide a continuous service, batteries of such vehicles have to be recharged. Since the recharging takes a considerable time, it must be taken into account during the planning of the vehicles' driving schedules. Thus, a practically relevant extension of the dial-a-ride problem is the integration of electric vehicle charging, leading to the electric vehicle dial-a-ride problem. In the electric vehicle dial-a-ride problem, it is considered that the vehicles consume energy by driving from one location to another and that it has to be ensured that the vehicles' batteries never get fully discharged. In order to increase the quality of the planned routes, visits at charging stations have to be included into them - it has to be planned, when, where and for how long vehicles charge.

However, exact approaches for the stated problem extension do not scale to a practically relevant number of requests/users. Heuristic approaches, which employ a compute-intensive operator for the insertion of charging sessions, suffer also from scalability issues.

A computer implemented method for determining routes of electric vehicles by a dial-a-ride system, in which all features of the preamble of claim 1 are disclosed, is described in Tai-Yu Ma: "Two-stage battery recharge scheduling and vehicle-charger assignment policy for dynamic electric dial-a-ride services", ARXIV.ORG, Cornell University Library, 201 Olin Library Cornell University, Ithaca, NY 14853, 4 October 2020.

It is an object of the present invention to provide an apparatus and a method, which reduce the above problems. In particular, an object of the present invention is to provide a computer-implemented method, a computer program product, an apparatus and a dial-a-ride system with which a driving schedule for electric vehicles is generated and that allow to determine the routes of electric vehicles (driving schedule for electric vehicles) with low efforts and costs.

This object is achieved by a computer program product, an apparatus and a dial-a-ride system according to the enclosed independent claims. Advantageous features of the present invention are defined in the corresponding dependent claims.

According to the present invention, a computer-implemented method for determining routes of electric vehicles by a dial-a-ride system is performed by a processor and comprises the steps of:

- obtaining ride requests, each of which indicates at least a pick-up location;
- setting a charging schedule indicating, for each electric vehicle having a battery, charging stations to visit on a route, an order in which the charging stations are visited, and a charging duration for each visited charging station; and
- determining the routes through the pick-up locations and the charging stations taking into account the charging schedule, wherein the determining step fills up the routes having the visits to the charging stations set in the setting step (S2) with the pick-up locations.

The drop-off location of each request can be preset, i.e., all electric vehicles have the same drop-off location (e.g. an end depot), or each request can specify an individual drop-off location, wherein in the determining step, the routes through the pick-up locations, the charging stations and the drop-off location(s) are determined, taking into account the charging schedule.

With the present invention, instead of inserting requests and then filling up the route with charging sessions (stations), the charging sessions (stations) are first inserted, and then the route is filled up with requests. In this way, the routes can be determined without a compute-intensive operator for the insertion of charging sessions.

In the setting step, at least one charging station for charging the battery of the electric vehicle can be inserted in at least one route that starts at a certain start location and stops at a certain end location, wherein no pickup location is inserted in the route. The charging station to be inserted can be randomly selected from a plurality of charging stations located in different places.

The routes and/or the charging stations, the order and the charging duration can be determined by a large neighborhood search algorithm, tabu search, genetic algorithm or hybrid heuristics.

Alternatively or in addition, the setting step and the determining step can be executed alternately iteratively until the routes serve all or a certain part of the ride requests and/or meet a certain objective with respect to a total driving time of the electric vehicles and/or travel times allocated to the requests, wherein at least one of the charging stations, the order and the charging duration is changed. This can be done in the form of a bilevel large neighborhood search algorithm, where the outer level is responsible for setting the visits to charging stations and the inner level is responsible for filling up the routes with requests. This algorithm does not employ a compute-intensive operator for the insertion of charging sessions, which can be expected to be beneficial for the scalability.

The electric vehicles computer implemented method can comprise a step of generating, for each electric vehicle, a signal for controlling the electric vehicle to drive the route determined in the determining step.

New routes (driving schedule) can be determined based on new requests and/or the current states of the electric vehicles (current position and/or current state-of-charge). For this, the method comprises the steps of

- obtaining, for at least one of the electric vehicles, information on a current position of the electric vehicle at a predetermined time;
- calculating a position of the electric vehicle at the predetermined time on the determined route, i.e., according to the current driving schedule; and
- re-determining the routes when a difference/distance between the current position and the calculated position exceeds a first threshold value (offset).

The certain start location of each electric vehicle can be (re)set to its current position when computing new routes (driving schedule), whereas for an electric vehicle that currently has a job (e.g., transporting passengers), the pick-ups (locations and/or times) and time windows of the current passengers have to be adapted.

Alternatively or in addition, the method comprises the steps of:

- obtaining, for at least one of the electric vehicles, information on a current charge state of the electric vehicle at a predetermined time;
- calculating a charge state of the electric vehicle at the predetermined time on the determined route based on the charging schedule; and
- re-determining the routes when a difference between the current charge state and the calculated charge state exceeds a second threshold value (tolerance range).

The first threshold value and/or the second threshold value can be preset by the provider of the dial-a-ride service and/or can be adapted/set based on the remaining driving time/distance of the respective electric vehicle to the next charging station, the next pick-up location, the next drop-off location and/or the end of the route.

The program according to the present invention causes, when running on a computer or loaded onto a computer, the computer to execute the steps of:

- obtaining ride requests, each of which indicates at least a pick-up location and, if not preset, a drop-off location;
- setting a charging schedule indicating, for each electric vehicle having a battery, charging stations to visit on a route, an order in which the charging stations are visited, and a charging duration for each visited charging station; and
- determining the routes through the pick-up locations and the charging stations taking into account the charging schedule, wherein the determining step fills up the routes having the visits to the charging stations set in the setting step (S2) with the pick-up locations.

According to the present invention, an apparatus for determining routes of electric vehicles of a dial-a-ride system, comprising a processor configured to obtain ride requests, each of which indicates at least a pick-up location, to set, in a first step, a charging schedule indicating, for each electric vehicle, charging stations to visit on a route, an order in which the charging stations are visited, and a charging duration for each visited charging station, and to determine, in a second step, the routes through the pick-up locations and the charging stations taking into account the charging schedule, wherein the second step fills up the routes having the visits to the charging stations set in the setting step (S2) with the pick-up locations.

Alternatively or in addition, the apparatus can comprise a means for receiving a ride request from a user and transmitting a response to the user, wherein the processor is configured to determine whether or not the routes serve the ride request and to generate the response to inform the user whether the request is accepted or not.

In addition, the processor can be configured to estimate a pick-up time for the pick-up location indicated by the ride request and to generate the response including information on the estimated pick-up time, when the request is accepted.

According to the present invention, a dial-a-ride system comprises a plurality of electric vehicles, a plurality of charging stations for charging the electric vehicles and the described apparatus. The dial-a-ride system can be dynamic or non-dynamic and determine the routes before the vehicles start driving or while the vehicles are driving.

The system and/or any of the functions described herein may be implemented using individual hardware circuitry, using software functioning in conjunction with at least one of a programmed microprocessor, a general purpose computer, using an application specific integrated circuit (ASIC) and using one or more digital signal processors (DSPs)

Embodiments of the invention are discussed in detail with reference to the enclosed figures, in which

Fig. 1 shows a schematic of a dial-a-ride system according to an embodiment of the present invention,

Fig. 2 shows a flowchart for a method performed by the processor of the dial-a-ride system shown in Fig. 1,

Fig. 3 shows a first embodiment of an algorithm used in step S2 of the flowchart shown in Fig. 2,

FIG. 4 shows an embodiment of an algorithm used in step S3 of the flowchart shown in Fig. 2, and

FIG. 5 shows a second embodiment of an algorithm used in step S2 of the flowchart shown in Fig. 2.

In the figures, same reference numbers denote same or equivalent structures. The explanation of structures with same reference numbers in different figures is avoided where deemed possible for sake of conciseness.

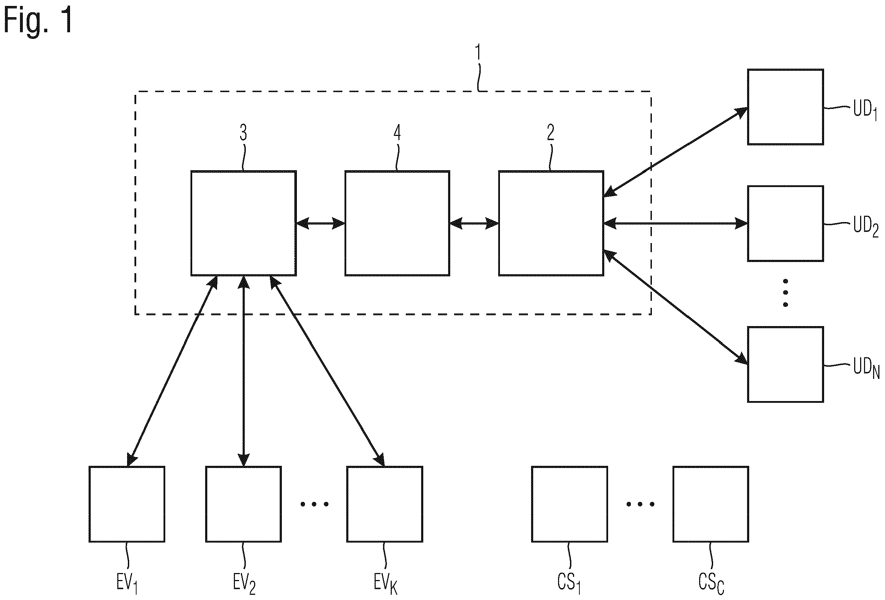

Fig. 1 shows a block diagram of a dial-a-ride system according to an embodiment of the present invention. The dial-a-ride system provides a person transport service and comprises a plurality of electric vehicles $EV_1$, $EV_2$, ... , $EV_K$, , a plurality of charging stations $CS_1$, ... , $CS_C$ for charging batteries of the electric vehicles $EV_1$, $EV_2$, ... , $EV_K$ and a scheduling apparatus 1 for determining routes (driving schedule) inclusive of charging sessions (charging schedule) for the electric vehicles $EV_1$, $EV_2$, ... , $EV_K$ to serve transportation requests received from users. The charging stations $CS_1$, ... , $CS_C$ and/or the electric vehicles $EV_1$, $EV_2$, ... , $EV_K$ could be, for example, public charging stations/private vehicles or charging stations/vehicles of the provider of the dial-a-ride service. The electric vehicles $EV_1$, $EV_2$, ... , $EV_K$ could be autonomous driving vehicles.

The user makes and sends his transport request using, for example, a mobile input device $UD_1$, $UD_2$, ... , $UD_N$ (e.g. smartphone). The scheduling apparatus 1 comprises a user interface 2 configured to receive the transportation requests including pick-up and drop-off locations from the mobile input devices $UD_1$, $UD_2$, ... , $UD_N$ and to transmit a response, which informs user whether the request is accepted or not and what the estimated pick-up time is, to the respective mobile input device $UD_1$, $UD_2$, ... , $UD_N$. In addition, the user interface 2 can provide a graphic user interface for entering the request.

The scheduling apparatus 1 further comprises a vehicle interface 3 for receiving information on current states of the electric vehicles $EV_1$, $EV_2$, ... , $EV_K$ (e.g., position, number of passengers, battery capacity and/or state-of-charge of each electric vehicle $EV_1$, $EV_2$, ... , $EV_K$) and transmitting the determined routes (driving schedule) to the electric vehicles $EV_1$, $EV_2$, ... , $EV_K$, and a processor 4 for determining the routes based on the received requests, information of the charging stations $CS_1$, ... , $CS_C$ (e.g. location and charging speed) and the information of current states of the electric vehicles $EV_1$, $EV_2$, ... , $EV_K$. The information of the charging stations $CS_1$, ... , $CS_C$ can be stored in a memory (not shown) of the scheduling apparatus 1 and/or can be received from the charging stations $CS_1$, ... , $CS_C$. Alternatively or in addition, start and end positions of the electric vehicles $EV_1$, $EV_2$, ... , $EV_K$ (e.g. locations of start and end depots), which correspond to the start and end of a route, can be stored in the memory so that, in a non-dynamic dial-a-ride system, it is not necessary to determine the current position of the electric vehicle $EV_1$, $EV_2$, ... , $EV_K$.

Each electric vehicle $EV_1$, $EV_2$, ... , $EV_K$ receives an individual route or extracts the route assigned to it from the routes (driving schedule) and drives the route to transport at least one person (passenger) in at least a section of the route. The route indicates a pickup location and a drop-off location of at least one person, the order of all pick-up and drop-off locations, or also the pick-up and drop-off times, and the charging sessions necessary for the route, i.e. which of the charging stations $CS_1$, ... , $CS_C$ to visit on the route and in what order, and the charging duration for each visited charging station $CS_1$, ..., $CS_C$.

The information on the route can be displayed to the driver, output acoustically or can be input in a navigation system of the electric vehicle $EV_1$, $EV_2$, ... , $EV_K$. Alternatively, the scheduling apparatus 1 can be configured to generate the navigation information based on the respective route and the current position of the electric vehicle $EV_1$, $EV_2$, ... ,

$EV_K$ and to transmit the navigation information to the electric vehicle $EV_1$, $EV_2$, ... , $EV_K$.

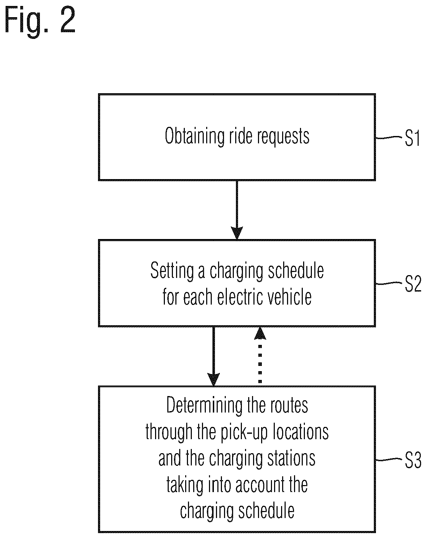

According to the present invention, the charging sessions for a route are first planned, and then the route is filled up with the requests (user trips). Fig. 2 shows the steps carried out by the processor 4 to determine the routes. In step S1, ride requests and other information on road maps, the charging stations $CS_1$, ... , $CS_C$ and current states of the electric vehicles $EV_1$, $EV_2$, ... , $EV_K$ are obtained. In step S2, a charging schedule indicating, for each electric vehicle $EV_1$, $EV_2$, ... , $EV_K$, charging stations $CS_1$, ... , $CS_C$ to visit on a route, an order in which the charging stations $CS_1$, ... , $CS_C$ are visited, and a charging duration for each visited charging station $CS_1$, ... , $CS_C$ is set and in step 3, the routes through the pick-up locations and the charging stations $CS_1$, ... , $CS_C$ are determined taking into account the charging schedule. In a dynamic system, the processor 4 monitors the current position of each electric vehicle $EV_1$, $EV_2$, ... , $EV_K$ and/or the current charging status of each battery and repeats the steps S1 and S3 when the current position and/or the charging status deviates too much from planned position and/or the planned charging status.

Assume there are three requests $RE_1$: $[PU_1, DO_1]$, $RE_2$: $[PU_2, DO_2]$ and $RE_3$: $[PU_3, DO_3]$, where $PU_1$ and $DO_1$ are the pick-up and drop-off locations of $RE_1$; $PU_2$ and $DO_2$ are the pick-up and drop-off locations of $RE_2$; and $PU_3$ and $DO_3$ are the pick-up and drop-off locations of $RE_3$, in step $S_2$, the charging stations $CS_1$ and $CSc$ may be set for the route of the electric vehicle $EV_1$: $[CS_1, CSc]$ and the charging station $CS_1$ may be set for the route of the electric vehicle $EV_2$: $[CS_1]$ and, in step $S_3$, the pick-up and drop-off locations of $RE_3$ and $RE_2$ may be inserted in the route of the electric vehicle $EV_1$: $[PU_3, DO_3, CS_1, PU_2, DO_2, CS_C]$ and the pick-up and drop-off location of $RE_1$ may be inserted in the route of the electric vehicle $EV_2$: $[PU_1, DO_1, CS_1]$ based on the charging stations $CS_1$, $CS_C$ (charging sessions) set in step S2 and the pick-up and drop-off locations of the requests $RE_1$, $RE_2$, $RE_3$ by a heuristic decision. In particular, the routes can be determined by a large neighborhood search algorithm.

In addition, as indicated by the dotted line in Fig. 2, the setting step S2 and the determining step S3 can be executed alternately iteratively until the routes serve all or a certain part of the ride requests $RE_1$, $RE_2$, $RE_3$ and/or meet a certain objective with respect to a total driving time of the electric vehicles $EV_1$, $EV_2$ and/or travel times allocated to the requests $RE_1$, $RE_2$, $RE_3$, wherein at least one of the charging stations $CS_1$, $CS_C$, the order of the charging stations $CS_1$, $CS_C$ in the routes $EV_1$: $[CS_1, CS_C]$ and $EV_2$: $[CS_1]$ and the charging duration is changed when step S2 is executed repeatedly.

According to the present invention, a bi-level large neighborhood search can be used to calculate the routes in steps S2 and S3, wherein in the outer level (steps S2), charging sessions are inserted in the routes of vehicles and in the inner level (steps S3), the pick-up and drop-off locations of the requests are inserted.

The bi-level large neighborhood search is described below by means of specific constraints or objectives. However, this is just an example of the electric vehicle dial-a-ride problem, and other constraints or objectives could be considered in practice.

Nomenclature:

Parameters

| | |
|---|---|
| $\alpha_i$ | Charging speed at charging station $i$ |
| $B$ | Battery capacity of vehicles |
| $X$ | Number of charging stations |
| $d_i$ | Duration of service at location $i$ |
| $e_{i;j}$ | Energy it takes to drive from location $i$ to location $j$ |
| $Y$ | Number of vehicles |
| $L$ | Load capacity of vehicles |
| $l_i$ | Load of location $i$ |
| $N$ | Number of requests |
| $r$ | Minimum final battery capacity ratio |
| $S$ | Upper bound for a passenger's ride time |
| $T$ | Length of planning horizon |
| $t_{i;j}$ | Time it takes to drive from location $i$ to location $j$ |
| $w_i^+$ | Upper bound of time window of location $i$ |
| $w_c^-$ | Lower bound of time window of location $i$ |

Sets

| | |
|---|---|
| $C$ | Set of charging stations |
| $D^+$ | Set of start depots |
| $D$ | Set of end depots |
| $K$ | Set of vehicles |
| $P^+$ | Set of pick-up locations |
| $P^-$ | Set of drop-off locations |
| $V$ | Set of all locations |

Variables

| | |
|---|---|
| $A_i$ | Time of arrival at location $i$ |
| $B_i^{arr}$ | Vehicle's battery level at arrival at location $i$ |
| $B_i^{dep}$ | Vehicle's battery level at departure from location $i$ |
| $L_i$ | Vehicle's load after serving location $i$ |
| $R_i$ | Excess ride time for request associated with pick-up location $i$ |
| $S_i$ | Time of service for location $i$ |
| $x_{i,j}^k$ | Flag indicating whether vehicle k drives from location $i$ to location $j$ |
| $x_{i,j}$ | Flag indicating whether any vehicle drives from location $i$ to location $j$ |

It is assumed that a set $K = \{1, \ldots , Y\}$ of $Y$ electric vehicles is available to serve $N$ requests. For each request, there is a pick-up and a drop-off location. Let $P^+ = \{1, \ldots , N\}$ denote the set of pick-up locations and $P^- = \{N + 1, \ldots , 2N\}$ denote the set of drop-off locations. Each vehicle is associated with a start and an end depot (position). Let $D^+ = \{2N + 1, \ldots , 2N + Y\}$ be the set of start depots and let $D^- = \{2N + Y + 1, \ldots , 2N + 2Y\}$ be the set of end depots. Furthermore, there is a set $C = \{2N + 2Y + 1, \ldots , 2N + 2Y + X\}$ of $X$ charging stations. Optionally, if it is permitted to visit a physical charging station more than once, the set $C$ might contain a sufficient number of "virtual charging stations" or "charging sessions", which are replications of the physical charging station locations. Let $V = P^+ \cup P^- \cup D^+ \cup D^- \cup C$ denote the set of all locations of the problem. The ride from a location i to a location $j$, takes $t_{i,j}$ time units and consumes $e_{i,j}$ energy units. Each vehicle has a maximum battery capacity of $B$ energy units and a maximum load capacity $L,$ where the latter represents the maximum number of passengers a vehicle can transport at the same time. It is assumed that at the beginning of the planning horizon, the vehicles are empty and have fully charged batteries. Each location $i \in V$ is associated with a load (number of passengers) $l_i$ with $l_i = 0$ for all locations $i \in V \setminus (P^+ \cup P^-)$ and $l_i > 0$ for all pick-up locations $i \in P^+$, and $l_i = -l_{i-N}$ for all drop-off locations $i \in P^-$. For each location $\in V$, a time window $[w_i^-, w_i^+]$ is defined.

For all locations $i \in V \setminus (P^+ \cup P^-)$, $w_i^-$ is set to 0 and $w_i^+$ is set to the length $T$ of the planning horizon. It is assumed that the service (i.e., the pick-up and drop-off of passengers) at location $i$ takes a certain time $d_i$ with $d_i = 0$ for locations $i \in V \setminus (P^+ \cup P^-)$. Each charging station $i \in C$ has a certain charging speed of $\alpha_i$ energy units per time unit. Furthermore, it is assumed that the battery level of a vehicle at the end of the planning horizon must not be lower than a ratio $r \in [0, 1]$ of its maximum battery capacity and that the time a passenger spends in a vehicle is limited by a maximum ride time $S$.

A solution to the problem consists of routes of the vehicles, i.e., a sequence of locations for each vehicle, together with service times $S_i$ for each visited location $i \in V$. Let the binary variable $x_{i,j}^k$ indicate whether vehicle k visits location *i* directly after location *j* in some given routes. An objective function and constraints can be assumed as described below.

It is searching for feasible routes, which are optimal with respect to the following objective:

$$\min w_1 \sum_{i,j \in V} \sum_{k \in K} t_{ij} x_{ij}^k + w_2 \sum_{i \in P^+} R_i, \tag{1}$$

where $w_1$ and $w_2$ are prespecified weights and $R_i$ is the excess ride time of request *i*, defined as follows:

$$R_i = S_{i+N} - (S_i + d_i) - t_{i,j+N} \qquad \forall i \in P^+. \tag{2}$$

Thus, the excess ride time is the time passengers spend in a vehicle longer than necessary and the total objective is to reduce (a weighted sum of) the total driving time of the vehicles and the excess ride time of passengers.

The routes have to fulfill the following constraints in order to be feasible. Each location can be visited at most once. A vehicle has to start its route at its corresponding start depot and cannot approach any start depot or an end depot of another vehicle. Furthermore, each vehicle's route has to end at its corresponding end depot and if a vehicle enters a location other than an end depot, it also has to leave the location:

$$\sum_{k \in K} \sum_{i \in V} x_{ij}^k \leq 1 \qquad \forall j \in V, \tag{3}$$

$$\sum_{j \in V \setminus \{2N+k\}} x_{2N+k,j}^k = 1 \qquad \forall k \in K, \tag{4}$$

$$\sum_{k \in K} \sum_{i \in V} x_{i,j}^k = 0 \qquad \forall j \in D^+, \tag{5}$$

$$\sum_{i \in V \setminus \{2N+k\}} x_{i,2N+Y+k}^k = 1 \qquad \forall k \in K, \tag{6}$$

$$\sum_{j \in V} x_{j,i}^k - \sum_{j \in V} x_{i,j}^k = 0 \qquad \forall k \in K, \forall i \in V \setminus D^-, \tag{7}$$

$$\sum_{k \in K} \sum_{i \in V} x_{i,j}^k = 1 \qquad \forall j \in P^+, \tag{8}$$

$$\sum_{i \in V} x_{i,j}^k = \sum_{i \in V} x_{i,j+N}^k \qquad \forall k \in K, \forall j \in P^+. \tag{9}$$

Note that this means that a solution, in which not all requests are served, is infeasible.

In the following, the binary flag $x_{i,j}$ is used to indicate whether any of the vehicles drives from location *i* to location *j*:

$$x_{i,j} = \sum_{k \in K} x_{i,j}^k \qquad \forall i,j \in V. \tag{10}$$

The service time $S_i$ of a location $i \in V$ must not be earlier than the corresponding arrival time $A_i$ (set in (11) and (12)) and has to adhere to the time window constraint. Furthermore, a drop-off location cannot be visited/served earlier than the corresponding pick-up location, and the maximum ride time constraint has to be satisfied:

$$A_i = 0 \qquad \forall i \in D^+, \tag{11}$$

$$A_i = \sum_{j \in V}(S_j + d_j + t_{j,i}) \cdot x_{j,i} \qquad \forall i \in V \setminus D^+, \tag{12}$$

$$S_i \geq A_i \qquad \forall i \in V, \tag{13}$$

$$w_i^- \leq S_i \leq w_i^+ \qquad\qquad \forall i \in V, (14)$$

$$S_i \leq S_{i+N} \qquad\qquad \forall i \in P^+, (15)$$

$$S_{i+N} - (S_i + d_j) \leq S \qquad\qquad \forall i \in P^+. (16)$$

The load $L_i$ after visiting location $i$ (set in (17) and (18)) cannot be larger than the maximum load capacity $L$ and charging stations can only be visited by empty vehicles:

$$L_i = 0 \qquad\qquad \forall i \in D^+, (17)$$

$$L_i = l_i + \sum_{j \in V} L_j \cdot x_{j,i} \qquad\qquad \forall i \in V \backslash D^+, (18)$$

$$L_i \leq L \qquad\qquad \forall i \in V, (19)$$

$$L_i = 0 \qquad\qquad \forall i \in C. (20)$$

The vehicles start their tours with full batteries. The battery level $B_i^{arr}$ at arrival at a location cannot fall below zero and the final minimum battery level ratio has to be satisfied. It is assumed that at a charging station $i \in C$, the time between arrival and service is used for charging and thus, the battery level $B_i^{dep}$ at departure from the charging station is up to $(S_i - A_i) \cdot \alpha_i$ energy units higher than at arrival. For all other locations, the battery level does not change between arrival and departure:

$$B_i^{arr} = B \qquad\qquad \forall i \in D^+, (21)$$

$$B_i^{arr} = \sum_{j \in V}(B_j^{dep} - e_{j,i}) \cdot x_{j,i} \qquad\qquad \forall i \in V \backslash D^+, (22)$$

$$B_i^{arr} \geq 0 \qquad\qquad \forall i \in V, (23)$$

$$B_i^{arr} \geq r \cdot B \qquad\qquad \forall i \in D^-, (24)$$

$$B_i^{dep} = \min(B, B_i^{arr} + (S_i - A_i) \cdot \alpha_i) \qquad\qquad \forall i \in C, (25)$$

$$B_i^{dep} = B_i^{arr} \qquad\qquad \forall i \in V \backslash C. (26)$$

A bi-level large neighborhood search approach is used for solving the stated problem. Large neighborhood search (LNS) is an established heuristic for solving the dial-a-ride problem and iteratively destroys and repairs solutions. In the context of the dial-a-ride problem, this means that requests are iteratively removed and reinserted from/into routes. In order to be able to schedule the visits to charging stations in the electric vehicle-dial-a-ride problem, the large neighborhood search is extend to a bi-level approach. The outer level sets and modifies charging sessions of vehicles and removes requests from rejected routes. The inner level inserts requests with help of a greedy insertion operator under consideration of the charging sessions set by the outer level. In the following, the main components of the approach are described in detail. In the explanation, it is assumed that in contrast to the previous problem formulation, the charging stations can be visited arbitrarily often. Later, it is explained, how the approach can be adapted if each charging station can be visited only once.

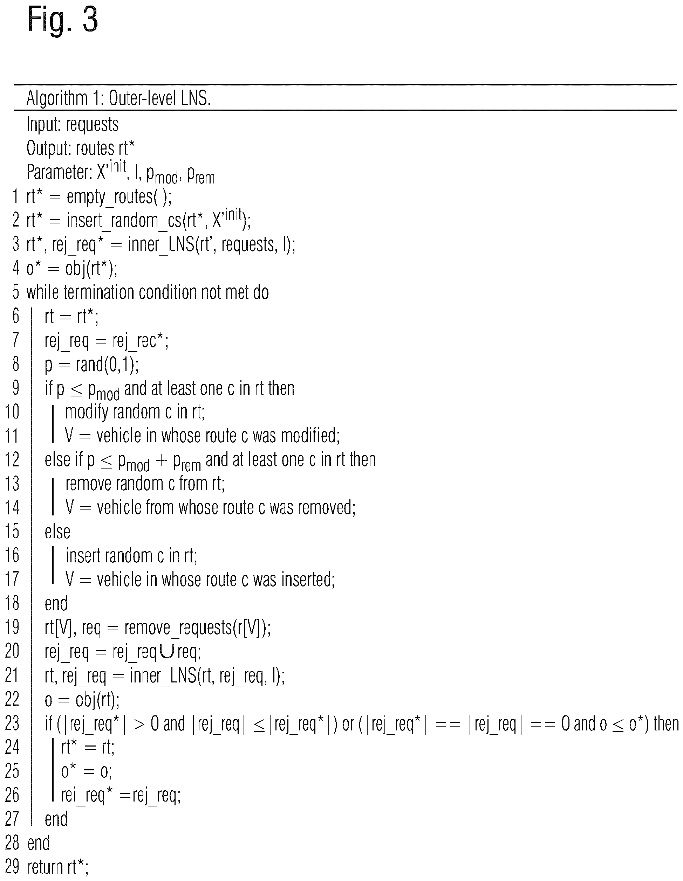

The outer-level LNS is responsible for setting the visits to charging stations in the routes. Algorithm 1 shown in Fig. 3 outlines how the outer-level works. It starts with empty routes, in which all vehicles directly drive from their start depot to their end depot. It then inserts in each vehicle's route a prespecified number $X^{init}$ of randomly generated charging sessions. Each charging session c has the following parameters:

- a location $c. i \in C$ of the physical charging station to charge at,
- a charging duration $c. d$, and
- a time window $c. w = [c. l, c. u]$ for the service time.

The physical charging station $c. i$ is uniformly sampled from the set $C$ of available charging stations. The charging duration $c. d$ is uniformly random chosen between zero and the time $d^{max} = B/a_{c.i}$ it takes to fully charge a vehicle's battery at the selected charging station. The lower bound $c.l$ of the time window is set to zero and the upper bound $c. u$ is uniformly random chosen from the interval $[t_{2N+k,c.i}, T - t_{c.i,2N+K+k}]$, where $k$ is the vehicle in whose route the charging session is inserted. In each route, the charging sessions are inserted between the start and end depot in increasing order of their time window upper bound $c. u$.

After initializing the routes, the inner-level LNS is then run for a prespecified number $I$ of iterations in order to insert the requests (i.e., the corresponding pick-up and drop-off locations) in the routes. The resulting routes are stored as currently best routes $rt^*$. They might be infeasible because the inner-level LNS was possibly not able to insert all requests without violating time, load or battery constraints. The requests, which could not be inserted are stored as the currently best set of rejected requests $rej\_req^*$ and the objective value of $rt^*$ is stored as the currently best objective value $o^*$.

In order to improve the currently best routes (i.e., increase the number of served requests and/or improve the objective function value), the following procedure is repeated until a termination condition is met: A copy $rt$ of the currently best routes $rt^*$ and a copy $rej\_req$ of the currently best set of rejected requests $rej\_req^*$is made and the charging sessions in $rt$ are varied by one of the following variation operators:

- Charging session modification *mod*,
- Charging session insertion ins, or
- Charging session removal *rem*.

The *mod* operator randomly selects a charging session from $rt$ and removes it together with all pick-up and drop-off locations from the corresponding route. Then, it inserts a new random charging session in the route at a position which ensures that the charging sessions in the route are still sorted in increasing order of their upper time window bounds. The *ins* operator randomly selects a route, removes the pick-up and drop-off locations from it and inserts a new random charging session in the route (preserving the correct order of the charging sessions). The rem operator works like the *mod* operator without insertion of a new charging session. If $rt$ does not contain any charging session, the *ins* operator is selected as variation operator. Otherwise, the used operator is randomly selected with different probabilities $p_{mod}, p_{ins}, p_{rem}$, respectively, for the different operators. The requests, which were removed from $rt$ by the variation operator, are added to the set of rejected requests $rej\_req$.

$I$ iterations of the inner-level LNS are then executed on $rt$ in order to try to insert the requests $rej\_req$. If the resulting routes $rt$ serve at least as many requests as $rt^*$ and one of the following conditions holds:

- $rt^*$ does not serve all requests, or
- $rt^*$ serves all requests and the objective value o of $rt$ is less or equal the objective value $o^*$ of $rt^*$, then $rt$ is stored as new currently best routes $rt^*$ and otherwise it is rejected.

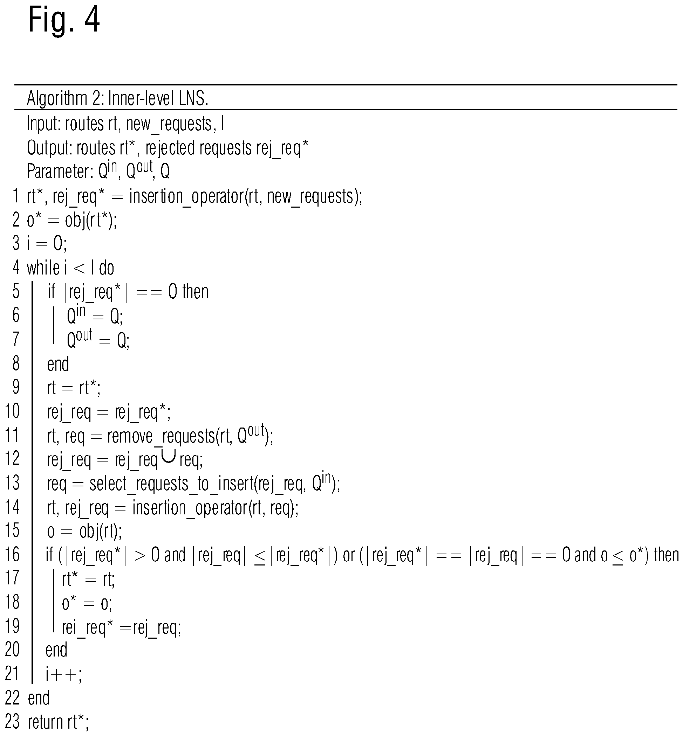

The inner-level LNS works as outlined in Algorithm 2 shown in Fig. 4. It takes existing routes and a set of requests to insert as input and first tries to insert the requests with help of an insertion operator. Then it tries to improve the resulting routes $rt^*$ by iteratively (re-)inserting requests. In each iteration, it removes $Q^{out}$ randomly selected requests from the currently best routes and tries to insert $Q^{in}$ randomly selected unserved requests with help of the insertion operator.

Similar to the outer-level LNS, if the resulting routes are at least as good as the currently best routes in terms of the number of served requests and/or the objective value, they are accepted as new currently best routes and otherwise they are rejected. As long as not all requests are served in the currently best routes $rt^*$, $Q^{in}$ is set to a larger value than $Q^{out}$ in order to try to increase the number of served requests. After a solution, which serves all requests, is found, $Q^{in}$

and $Q^{out}$ are both set to the same value Q.

For the actual insertion of requests, a greedy operator can be used. It takes as input existing routes and a series of requests to insert and tries to insert each of these requests in the given order. For each request, it traverses the current routes and determines all combinations of positions where the corresponding pick-up and drop-off locations can be inserted without violating constraints. If at least one such combination exists, the pick-up and drop-off locations are inserted at the positions of the combination which results in the lowest increase of the objective function value and otherwise, the request is not inserted. In order to reduce the risk of getting stuck in a local optimum, random noise can be added to the increases of the objective function values associated to the different position combinations.

When checking the feasibility of a route, charging sessions are taken into account as follows: For each charging session $c$ in the route, it is assumed that the charging takes place at position $c.$ $i$ with a charging speed of $a_{c,i}$. It is checked that the time window $c.$ $w$ is satisfied and that the station is not visited with a passenger on board. It is assumed that the vehicle charges for $c.$ $d$ time units after arriving at the station and thus, the service time of the charging session is the arrival time plus $c.$ $d.$

Without the maximum ride time constraint and the excess ride time in the objective function, it would be sufficient to set the service times of all other locations to their corresponding arrival times. However, with the given problem formulation it might be beneficial to reduce the passenger ride times by delaying the services at pick-up locations. In order to check whether a given route, which satisfies the time window constraint, also satisfies the ride time constraint, the 8-step approach based on forward time slacks as described by J.-F. Cordeau, G. Laporte, "A tabu search heuristic for the static multi-vehicle dial-a-ride problem", Transportation Research Part B: Methodological 37 (6) (2003) 579-594 can be used. It shifts the services at the pick-up locations to the latest possible points in time without violation of the time window constraint and without an increase in the violation of the ride time constraint. Then it checks whether the ride time constraint is satisfied with the given service times. The same approach can be used to delay the service times before computing the objective function value. It has to be noted that while this approach typically reduces the excess ride time compared to setting the service times at pick-ups to the earliest possible points in time, it cannot guarantee an optimal excess ride time.

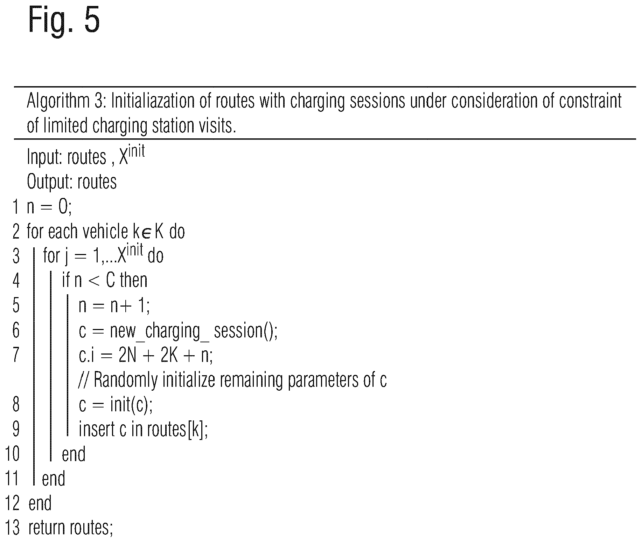

If a charging station $i \in C$ can be visited only once, the outer-level LNS described above has to be adapted. The following approach can be used to deal with the constraint of limited $CS$ visits: The initialization of the routes with charging sessions (insert_random_cs in line 2 of Algorithm 1) is done as outlined in Algorithm 3 shown in Fig. 5. It ensures that no physical charging station is visited more than once. The $mod$ variation operator inserts a new charging session with the same physical charging station $i \in C$ as the previously removed charging session. The $ins$ operator takes care that the physical charging station of the inserted charging session is not already in the routes. If all physical charging stations are used in the routes, the $mod$ operator is used instead of the $ins$ operator.

**Claims**

1. A computer implemented method for determining routes of electric vehicles ($EV_1$, $EV_2$, ... , $EV_K$) by a dial-a-ride system, the method performed by a processor comprising the steps of:

   obtaining ($S_1$) ride requests, each of which indicates at least a pick-up location;
   setting (S2) a charging schedule indicating, for each electric vehicle ($EV_1$, $EV_2$, ... , $EV_K$), charging stations ($CS_1$, ... , $CS_C$) to visit on a route, an order in which the charging stations ($CS_1$, ... , $CS_C$) are visited, and a charging duration for each visited charging station ($CS_1$, ... , $CS_C$); and
   determining ($S_3$) the routes through the pick-up locations and the charging stations ($CS_1$, ... , $CS_C$),
   **characterized in that**
   the routes through the pick-up locations and the charging stations ($CS_1$, ... , $CS_C$) are determined taking into account the charging schedule, wherein
   the determining step ($S_3$) fills up the routes having the visits to the charging stations set in the setting step (S2) with the pick-up locations.

2. The computer implemented method according to claim 1, wherein
   in the setting step (S2), at least one charging station ($CS_1$, ... , $CS_C$) is inserted in at least one route that starts at a certain start location and stops at a certain end location, with no pickup location inserted.

3. The computer implemented method according to claim 1 or 2, wherein
   in the setting step (S2), the charging stations ($CS_1$, ... , $CS_C$), the order and the charging duration are determined by a large neighborhood search algorithm.

4. The computer implemented method according to any one of the preceding claims, wherein in the determining step (S3), the routes are determined by a large neighborhood search algorithm.

5. The computer implemented method according to any one of the preceding claims, wherein the setting step (S2) and the determining step (S$_3$) are executed alternately iteratively until the routes serve all or a certain part of the ride requests and/or meet a certain objective with respect to a total driving time of the electric vehicles (EV$_1$, EV$_2$, ... , EV$_K$) and/or travel times allocated to the requests, wherein at least one of the charging stations (CS$_1$, ... , CS$_C$), the order and the charging duration is changed.

6. The computer implemented method according to any one of the preceding claims, further comprising the step of: generating, for each electric vehicle (EV$_1$, EV$_2$, ... , EV$_K$), a signal for controlling the electric vehicle (EV$_1$, EV$_2$, ... , EV$_K$) to drive the route determined in the determining step.

7. The computer implemented method according to any one of the preceding claims, further comprising the steps of:

   obtaining, for at least one of the electric vehicles (EV$_1$, EV$_2$, ... , EV$_K$), information on a current position of the electric vehicle (EV$_1$, EV$_2$, ... , EV$_K$) at a predetermined time;
   calculating a position of the electric vehicle (EV$_1$, EV$_2$, ... , EV$_K$) at the predetermined time on the determined route; and
   re-determining the routes when a difference between the current position and the calculated position exceeds a first predefined threshold value.

8. The computer implemented method according to any one of the preceding claims, further comprising the steps of:

   obtaining, for at least one of the electric vehicles (EV$_1$, EV$_2$, ... , EV$_K$), information on a current charge state of the electric vehicle (EV$_1$, EV$_2$, ... , EV$_K$) at a predetermined time; and
   calculating a charge state of the electric vehicle (EV$_1$, EV$_2$, ... , EV$_K$) at the predetermined time on the determined route based on the charging schedule; and
   re-determining the routes when a difference between the current charge state and the calculated charge state exceeds a second predefined threshold value.

9. A program that, when running on a computer or loaded onto a computer, causes the computer to execute the steps of the computer implemented method according to any one of claims 1 to 8.

10. An apparatus for determining routes of electric vehicles of a dial-a-ride system, comprising a processor (4) configured to

    obtain ride requests, each of which indicates at least a pick-up location;
    set, in a first step, a charging schedule indicating, for each electric vehicle (EV$_1$, EV$_2$, ... , EV$_K$), charging stations (CS$_1$, ... , CS$_C$) to visit on a route, an order in which the charging stations (CS$_1$, ... , CS$_C$) are visited, and a charging duration for each visited charging station (CS$_1$, ... , CS$_C$); and
    determine, in a second step, the routes through the pick-up locations and the charging stations (CS$_1$, ... , CS$_C$), **characterized in that**
    the processor (4) configured to determine the routes through the pick-up locations and the charging stations (CS$_1$, ... , CS$_C$) taking into account the charging schedule, wherein
    the second step fills up the routes having the visits to the charging stations set in the setting step (S2) with the pick-up locations.

11. The apparatus according to claim 10, further comprising

    means (2, 3) for receiving a ride request from a user and transmitting a response to the user, wherein
    the processor (4) is configured to determine whether or not the routes serve the ride request and to generate the response to inform the user whether the request is accepted or not.

12. The apparatus according to claim 11, wherein
    the processor (4) is configured to estimate a pick-up time for the pick-up location indicated by the ride request and to generate the response including information on the estimated pick-up time, when the request is accepted.

**13.** A dial-a-ride system comprising a plurality of electric vehicles ($EV_1$, $EV_2$, ... , $EV_K$), a plurality of charging stations ($CS_1$, ... , $CS_C$) for charging the electric vehicles ($EV_1$, $EV_2$, ... , $EV_K$) and the apparatus according to any one of claims 10 to 12.

**Patentansprüche**

**1.** Ein computerimplementiertes Verfahren zum Festlegen von Routen von Elektrofahrzeugen ($EV_1$, $EV_2$, ..., $EV_K$) durch ein Dial-a-Ride-System, wobei das Verfahren von einem Prozessor durchgeführt wird und die folgenden Schritte aufweist:

Erhalten (S1) von Fahrt-Anfragen, von denen jede zumindest einen Abholort angibt;
Erstellen (S2) eines Ladeplans, der für jedes Elektrofahrzeug ($EV_1$, $EV_2$, ..., $EV_K$) für eine Route mit anzufahrenden Ladestationen ($CS_1$, ..., $CS_C$) eine Reihenfolge angibt, in der die Ladestationen ($CS_1$, ..., $CSc$) angefahren werden sollen, sowie eine Ladedauer für jede angefahrene Ladestation ($CS_1$, ..., $CS_C$); und
Festlegen (S3) der Routen auf Grundlage der Abholorte und der Ladestationen ($CS_1$, ..., $CS_C$),
**dadurch gekennzeichnet, dass**
die Routen durch die Abholorte und die Ladestationen ($CS_1$, ..., $CSc$) unter Berücksichtigung des Ladeplans festgelegt werden, wobei
in dem Schritt des Festlegens (S3) die Routen, welche die im Schritt des Erstellens (S2) bestimmten Anfahrten zu den Ladestationen enthalten, mit den Abholorten ergänzt werden.

**2.** Das computerimplementierte Verfahren nach Anspruch 1, wobei
in dem Schritt des Erstellens (S2) zumindest eine Ladestation ($CS_1$, ..., $CS_C$) in zumindest eine Route eingefügt wird, welche an einem bestimmten Ausgangspunkt beginnt und an einem bestimmten Endpunkt endet, wobei kein Abholort eingefügt wird.

**3.** Das computerimplementierte Verfahren nach Anspruch 1 oder 2, wobei
in dem Schritt des Erstellens (S2) die Ladestationen ($CS_1$, ..., $CS_C$), die Reihenfolge und die Ladedauer durch einen Suchalgorithmus in weitläufiger Nachbarschaft bestimmt werden.

**4.** Das computerimplementierte Verfahren nach einem der vorherigen Ansprüche, wobei
in dem Schritt des Festlegens (S3) die Routen durch einen Suchalgorithmus in weitläufiger Nachbarschaft bestimmt werden.

**5.** Das computerimplementierte Verfahren nach einem der vorherigen Ansprüche, wobei
der Schritt des Erstellens (S2) und der Schritt des Festlegens (S3) abwechselnd iterativ ausgeführt werden, bis die Routen allen oder einem bestimmten Teil der Fahrt-Anfragen entsprechen und/oder einem bestimmten Ziel in Bezug auf eine Gesamtfahrzeit der Elektrofahrzeuge ($EV_1$, $EV_2$, ... , $EV_K$) und/oder den Anfragen entsprechende Fahrzeiten erfüllen, wobei zumindest die Ladestationen ($CS_1$, ..., $CS_C$) und/oder die Reihenfolge und/oder die Ladedauer verändert werden.

**6.** Das computerimplementierte Verfahren nach einem der vorherigen Ansprüche, ferner aufweisend den folgenden Schritt:
Erzeugen eines Signals, für jedes Elektrofahrzeug ($EV_1$, $EV_2$, ..., $EV_K$), zum Steuern des Elektrofahrzeugs ($EV_1$, $EV_2$, ..., $EV_K$), um die im Schritt des Festlegens festgelegte Route zu fahren.

**7.** Das computerimplementierte Verfahren nach einem der vorherigen Ansprüche, ferner aufweisend die folgenden Schritte:

Erhalten von Informationen über eine aktuelle Position des Elektrofahrzeugs ($EV_1$, $EV_2$, ... , $EV_K$) zu einem vorbestimmten Zeitpunkt für zumindest eines der Elektrofahrzeuge ($EV_1$, $EV_2$, ... , $EV_K$);
Berechnen einer Position des Elektrofahrzeugs ($EV_1$, $EV_2$, ..., $EV_K$) zu dem vorbestimmten Zeitpunkt auf der festgelegten Route; und
Neufestlegen der Routen, wenn eine Differenz zwischen der aktuellen Position und der berechneten Position einen ersten vordefinierten Schwellenwert überschreitet.

**8.** Das computerimplementierte Verfahren nach einem der vorherigen Ansprüche, ferner aufweisend die folgenden Schritte:

Erhalten von Informationen über einen aktuellen Ladezustand des Elektrofahrzeugs ($EV_1$, $EV_2$, ..., $EV_K$) zu einem vorbestimmten Zeitpunkt für zumindest eines der Elektrofahrzeuge ($EV_1$, $EV_2$, ..., $EV_K$); und

Berechnen eines Ladezustands des Elektrofahrzeugs ($EV_1$, $EV_2$, ..., $EV_K$) zu dem vorbestimmten Zeitpunkt auf der festgelegten Route auf Grundlage des Ladeplans; und

Neufestlegen der Routen, wenn eine Differenz zwischen dem aktuellen Ladezustand und dem berechneten Ladezustand einen zweiten vordefinierten Schwellenwert überschreitet.

9. Ein Programm, welches, wenn es auf einem Computer läuft oder auf einen Computer geladen wird, den Computer veranlasst, die Schritte des computerimplementierten Verfahrens nach einem der Ansprüche 1 bis 8 auszuführen.

10. Eine Vorrichtung zum Festlegen von Routen von Elektrofahrzeugen eines Dial-a-Ride-Systems, mit einem Prozessor (4), ausgebildet, um

Fahrt-Anfragen zu erhalten, von welchen jede zumindest einen Abholort enthält, um,
in einem ersten Schritt, einen Ladeplan zu erstellen, der für jedes Elektrofahrzeug ($EV_1$, $EV_2$, ..., $EV_K$), für eine Route mit anzufahrenden Ladestationen ($CS_1$, ..., $CS_C$) eine Reihenfolge angibt, in der die Ladestationen ($CS_1$, ..., $CS_C$) angefahren werden sollen, sowie eine Ladedauer für jede angefahrene Ladestation ($CS_1$, ..., $CS_C$), und um,
in einem zweiten Schritt, die durch die Abholorte und zu den Ladestationen ($CS_1$, ..., $CS_C$) führenden Routen festzulegen,
**dadurch gekennzeichnet, dass**
der Prozessor (4) ausgebildet ist, um die Routen durch die Abholorte und zu den Ladestationen ($CS_1$, ..., $CS_C$) unter Berücksichtigung des Ladeplans festzulegen, wobei,
in dem zweiten Schritt, die Routen, welche die im Schritt des Erstellens (S2) bestimmten Anfahrten zu den Ladestationen enthalten, mit den Abholorten ergänzt werden.

11. Die Vorrichtung nach Anspruch 10, ferner aufweisend

Mittel (2, 3) zum Empfangen einer Fahrt-Anfrage von einem Benutzer und zum Übertragen einer Antwort an den Benutzer, wobei
der Prozessor (4) so ausgebildet ist, dass er feststellt, ob die Routen der Fahrt-Anfrage entsprechen oder nicht, und dass er eine Antwort erzeugt, um den Benutzer darüber zu informieren, ob der Anfrage entsprochen werden kann oder nicht.

12. Die Vorrichtung nach Anspruch 11, wobei
der Prozessor (4) so ausgebildet ist, dass er für den bei der Fahrt-Anfrage angegebenen Abholort eine Abholzeit schätzt und die Antwort mit der Information über die geschätzte Abholzeit generiert, wenn der Anfrage entsprochen werden kann.

13. Ein Dial-a-ride-System mit einer Mehrzahl an Elektrofahrzeugen ($EV_1$, $EV_2$, ... , $EV_K$), einer Mehrzahl an Ladestationen ($CS_1$, ... , $CS_C$) zum Laden der Elektrofahrzeuge ($EV_1$, $EV_2$, ... , $EV_K$) und der Vorrichtung nach einem der Ansprüche 10 bis 12.

**Revendications**

1. Procédé mis en oeuvre par ordinateur pour déterminer des itinéraires de véhicules électriques ($EV_1$, $EV_2$,..., $EV_K$) par un système de transport sur demande, le procédé réalisé par un processeur comprenant les étapes consistant à :

obtenir (S1) des demandes de transport, chacune d'elles indiquant au moins un lieu de prise en charge ;
définir (S2) une planification de charge indiquant, pour chaque véhicule électrique ($EV_1$, $EV_2$,..., $EV_K$), des stations de charge ($CS_1$,..., $CS_C$) à visiter sur un itinéraire, un ordre dans lequel les stations de charge ($CS_1$,..., $CS_C$) sont visitées, et une durée de charge pour chaque station de charge ($CS_1$,..., $CS_C$) visitée ; et
déterminer (S3) les itinéraires passant par les lieux de prise en charge et les stations de charge ($CS_1$,..., $CS_C$),
**caractérisé en ce que**
les itinéraires passant par les lieux de prise en charge et les stations de charge ($CS_1$,..., $CS_C$) sont déterminés en tenant compte de la planification de charge, dans lequel
l'étape de détermination (S3) renseigne les itinéraires ayant les visites aux stations de charge définies à l'étape de définition (S2) avec les lieux de prise en charge.

2. Procédé mis en oeuvre par ordinateur selon la revendication 1, dans lequel
à l'étape de définition (S2), au moins une station de charge ($CS_1$,..., $CS_C$) est insérée dans au moins un itinéraire qui commence à un certain lieu de départ et se termine à un certain lieu d'arrivée, sans aucun lieu de prise en charge inséré.

3. Procédé mis en oeuvre par ordinateur selon la revendication 1 ou 2, dans lequel
à l'étape de définition (S2), les stations de charge ($CS_1$,..., $CS_C$), l'ordre et la durée de charge sont déterminés par un algorithme de recherche à grand voisinage.

4. Procédé mis en oeuvre par ordinateur selon l'une quelconque des revendications précédentes, dans lequel
à l'étape de détermination (S3), les itinéraires sont déterminés par un algorithme de recherche à grand voisinage.

5. Procédé mis en oeuvre par ordinateur selon l'une quelconque des revendications précédentes, dans lequel
l'étape de définition (S2) et l'étape de détermination (S3) sont exécutées en alternance et itérativement jusqu'à ce que les itinéraires desservent l'intégralité ou une certaine partie des demandes de transport et/ou atteignent un certain objectif en ce qui concerne un temps de conduite total des véhicules électriques ($EV_1$, $EV_2$,..., $EV_K$) et/ou des temps de déplacement attribués aux demandes, dans lequel au moins l'un ou l'une des stations de charge ($CS_1$,..., $CS_C$), de l'ordre et de la durée de charge est changé.

6. Procédé mis en oeuvre par ordinateur selon l'une quelconque des revendications précédentes, comprenant en outre l'étape consistant à :
générer, pour chaque véhicule électrique ($EV_1$, $EV_2$,..., $EV_K$), un signal pour commander au véhicule électrique ($EV_1$, $EV_2$,..., $EV_K$) de suivre l'itinéraire déterminé à l'étape de détermination.

7. Procédé mis en oeuvre par ordinateur selon l'une quelconque des revendications précédentes, comprenant en outre les étapes consistant à :

obtenir, pour au moins l'un des véhicules électriques ($EV_1$, $EV_2$,..., $EV_K$), des informations sur une position courante du véhicule électrique ($EV_1$, $EV_2$,..., $EV_K$) à un temps prédéterminé ;
calculer une opposition du véhicule électrique ($EV_1$, $EV_2$,..., $EV_K$) au temps prédéterminé sur l'itinéraire déterminé ; et
redéterminer les itinéraires lorsqu'une différence entre la position courante et la position calculée dépasse une première valeur de seuil prédéfinie.

8. Procédé mis en oeuvre par ordinateur selon l'une quelconque des revendications précédentes, comprenant en outre les étapes consistant à :

obtenant, pour au moins l'un des véhicules électriques ($EV_1$, $EV_2$,..., $EV_K$), des informations sur un état de charge courant du véhicule électrique ($EV_1$, $EV_2$,..., $EV_K$) à un temps prédéterminé ; et
calculer un état de charge du véhicule électrique ($EV_1$, $EV_2$,..., $EV_K$) au temps prédéterminé sur l'itinéraire déterminé sur la base de la planification de charge ; et
redéterminer les itinéraires lorsqu'une différence entre l'état de charge courant et l'état de charge calculé dépasse une deuxième valeur de seuil prédéfinie.

9. Programme qui, lorsqu'il est exécuté sur un ordinateur ou chargé sur un ordinateur, amène l'ordinateur à exécuter les étapes du procédé mis en oeuvre par ordinateur selon l'une quelconque des revendications 1 à 8.

10. Appareil pour déterminer des itinéraires de véhicules électriques d'un système de transport sur demande, comprenant un processeur (4) configuré pour :

obtenir des demandes de transport, chacune d'elles indiquant au moins un lieu de prise en charge ;
définir, à une première étape, une planification de charge indiquant, pour chaque véhicule électrique ($EV_1$, $EV_2$,..., $EV_K$), des stations de charge ($CS_1$,..., $CS_C$) à visiter sur un itinéraire, un ordre dans lequel les stations de charge ($CS_1$,..., $CS_C$) sont visitées, et une durée de charge pour chaque station de charge ($CS_1$,..., $CS_C$)

visitée ; et

déterminer, à une deuxième étape, les itinéraires passant par les lieux de prise en charge et les stations de charge ($CS_1$,..., $CS_C$),

**caractérisé en ce que**

le processeur (4) est configuré pour déterminer les itinéraires passant par les lieux de prise en charge et les stations de charge ($CS_1$,..., $CS_C$) en tenant compte de la planification de charge, dans lequel

la deuxième étape renseigne les itinéraires ayant les visites aux stations de charge définies à l'étape de définition (S2) avec les lieux de prise en charge.

**11.** Appareil selon la revendication 10, comprenant en outre

des moyens (2, 3) pour recevoir une demande de transport d'un utilisateur et transmettre une réponse à l'utilisateur, dans lequel

le processeur (4) est configuré pour déterminer si les itinéraires desservent ou non la demande de transport et pour générer la réponse pour informer l'utilisateur en précisant si la demande est ou non acceptée.

**12.** Appareil selon la revendication 11, dans lequel

le processeur (4) est configuré pour estimer un temps de prise en charge pour le lieu de prise en charge indiqué par la demande de transport et générer la réponse comportant des informations sur le temps de prise en charge estimé, lorsque la demande est acceptée.

**13.** Système de transport sur demande comprenant une pluralité de véhicules électriques ($EV_1$, $EV_2$,..., $EV_K$), une pluralité de stations de charge ($CS_1$,..., $CSc$) pour charger les véhicules électriques ($EV_1$, $EV_2$,..., $EV_K$) et l'appareil selon l'une quelconque des revendications 10 à 12.

Fig. 1

# Fig. 2

```
┌─────────────────────────────┐
│                             │
│   Obtaining ride requests   │ ─── S1
│                             │
└─────────────────────────────┘
              │
              ▼
┌─────────────────────────────┐
│  Setting a charging schedule │
│   for each electric vehicle  │ ─── S2
│                             │
└─────────────────────────────┘
         │        ▲
         │        ┊
         ▼        ┊
┌─────────────────────────────┐
│    Determining the routes    │
│  through the pick-up locations│
│   and the charging stations  │ ─── S3
│     taking into account the  │
│      charging schedule       │
└─────────────────────────────┘
```

# Fig. 3

---

Algorithm 1: Outer-level LNS.

---

Input: requests

Output: routes $rt^*$

Parameter: $X'^{init}$, I, $p_{mod}$, $p_{rem}$

```
1  rt* = empty_routes( );
2  rt* = insert_random_cs(rt*, X'init);
3  rt*, rej_req* = inner_LNS(rt', requests, I);
4  o* = obj(rt*);
5  while termination condition not met do
6      rt = rt*;
7      rej_req = rej_rec*;
8      p = rand(0,1);
9      if p ≤ pmod and at least one c in rt then
10         modify random c in rt;
11         V = vehicle in whose route c was modified;
12     else if p ≤ pmod + prem and at least one c in rt then
13         remove random c from rt;
14         V = vehicle from whose route c was removed;
15     else
16         insert random c in rt;
17         V = vehicle in whose route c was inserted;
18     end
19     rt[V], req = remove_requests(r[V]);
20     rej_req = rej_req ∪ req;
21     rt, rej_req = inner_LNS(rt, rej_req, I);
22     o = obj(rt);
23     if (|rej_req*| > 0 and |rej_req| ≤|rej_req*|) or (|rej_req*| == |rej_req| == 0 and o ≤ o*) then
24         rt* = rt;
25         o* = o;
26         rej_req* =rej_req;
27     end
28 end
29 return rt*;
```

# Fig. 4

---

Algorithm 2: Inner-level LNS.

---

Input: routes rt, new_requests, I

Output: routes rt*, rejected requests rej_req*

Parameter: $Q^{in}$, $Q^{out}$, Q

```
rt*, rej_req* = insertion_operator(rt, new_requests);
o* = obj(rt*);
i = 0;
while i < I do
    if |rej_req*| == 0 then
        Q^in = Q;
        Q^out = Q;
    end
    rt = rt*;
    rej_req = rej_req*;
    rt, req = remove_requests(rt, Q^out);
    rej_req = rej_req ∪ req;
    req = select_requests_to_insert(rej_req, Q^in);
    rt, rej_req = insertion_operator(rt, req);
    o = obj(rt);
    if (|rej_req*| > 0 and |rej_req| ≤ |rej_req*|) or (|rej_req*| == |rej_req| == 0 and o ≤ o*) then
        rt* = rt;
        o* = o;
        rei_req* = rej_req;
    end
    i++;
end
return rt*;
```

# Fig. 5

---

Algorithm 3: Initialiazation of routes with charging sessions under consideration of constraint of limited charging station visits.

---

Input: routes , $X^{init}$

Output: routes

$n = 0$;

for each vehicle $k \in K$ do

  for $j = 1,...X^{init}$ do

    if $n < C$ then

      $n = n+ 1$;

      $c = $ new_charging_ session();

      $c.i = 2N + 2K + n$;

      // Randomly initialize remaining parameters of c

      $c = $ init(c);

      insert c in routes[k];

    end

  end

end

return routes;

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011154613 A1

**Non-patent literature cited in the description**

- Two-stage battery recharge scheduling and vehicle-charger assignment policy for dynamic electric dial-a-ride services. **TAI-YU MA.** ARXIV.ORG. Cornell University Library, 201 Olin Library Cornell University, 04 October 2020

- **J.-F. CORDEAU ; G. LAPORTE.** A tabu search heuristic for the static multi-vehicle dial-a-ride problem. *Transportation Research Part B: Methodological,* 2003, vol. 37 (6), 579-594